# EUROPEAN PATENT APPLICATION

(11) **EP 2 728 055 A1**
(43) Date of publication of application: **07.05.2014**
(21) Application number: 12821383.2
(22) Date of filing: 10.08.2012
(51) Int. Cl.: D06F 39/08, D06F 39/06, D06F 39/12

(54) **WASHER FOR SUPPLYING MAGNETIZED WATER**

(30) Priority: 10.08.2011 KR 20110079519
(71) Applicant: Daewoo Electronics Corporation, Seoul 100-031 (KR)
(72) Inventor: MIN, Ga Young, Bucheon-si Gyeonggi-do 420-730 (KR)
(74) Representative: Michalski Hüttermann & Partner Patentanwälte
(86) International application number: PCT/KR2012/006386
(87) International publication number: WO 2013/022308

(57) **Abstract**

A washer for supplying magnetized water includes a cabinet; a magnetization unit installed in the cabinet and generating a magnetic field; and a water supply valve assembly connected to the magnetization unit and controlling a flow of wash water passing through the magnetization unit.

## Description

### [Technical Field]

The present invention relates to a washer for supplying magnetized water, and more particularly, to a washer for supplying magnetized water, , which is capable of improving washing power by changing the physical properties of wash water that contains lime materials as it enters into the washer, and easily separated and coupled unit for affecting lime-containing wash water.

### [Background Art]

In general, a washer uses an electric motor as a primary power unit, and performs washing, rinsing and spin-drying processes to remove stains from laundry items using water and detergent. The washer includes an electric motor serving as a power unit, a mechanical unit to transmit energy to laundry items, a control unit to control the washing process, and water supply and drain devices to supply and discharge water.

Depending on the washing methods, washers are divided into an agitator-type washer, a pulsator-type washer, and a drum-type washer. The agitator-type washer washes laundry items by rotating a wing-shaped agitator in the center of a washing tub, and the pulsator-type washer washes the laundry items using waves generated by rotating a disk-shaped pulsator. The drum-type washer includes a drum having a plurality of protrusions formed thereon. When the drum containing laundry items, wash water and detergent is rotated around a horizontal axis, the laundry items are lifted by a lifter. Then, the laundry items are washed by an impact that occurs when the laundry items fall.

A water supply device related to such a washer has been proposed in Korean Patent Laid-open Publication No. 10-2007-0064002, entitled "Water supply device for drum washer."

### [Disclosure]

### [Technical Problem]

In a conventional washer, when wash water that contains a lime material is supplied to the washer, the lime material may adhere to a water supply pipe and may cause the pipe to become clogged.

Furthermore, since wash water containing a lime material does not smoothly mix with detergent, more detergent than a reference amount may be required in the washer. For this reason, detergent may remain in laundry items after the washing operation.

Therefore, there is a demand for a structure capable of solving such problems.

The present invention is conceived to solve such problems of the related art, and an aspect of the invention is to provide a washer for supplying magnetized water, that is capable of affecting wash water containing a lime material to prevent foreign matter from adhering to a pipe, improving washing power, and easily separating from and coupling to a cabinet a magnetic unit through which lime-containing wash water passes.

### [Technical Solution]

According to an aspect of the invention, a washer for supplying magnetized water includes a cabinet; a magnetization unit installed through the cabinet and generating a magnetic field; and a water supply valve assembly connected to the magnetization unit and controlling a flow of wash water passing through the magnetization unit.

The washer may further include a bracket coupled to the cabinet and supporting the magnetization unit and the water supply valve assembly, and fixing the magnetization unit and the water supply valve assembly to the cabinet.

The bracket may be detachably coupled to the cabinet.

The bracket may include a first installation member having a first groove that surrounds an outside of the magnetization unit, where the magnetization unit is forcibly inserted and coupled to the first groove, and coupled to the cabinet; a second installation member having a second groove that surrounds an outside of the water supply valve assembly, where the water supply valve assembly is forcibly inserted and coupled to the second groove; and a connection member connecting the first and second installation members.

The magnetization unit may include a pair of first flanges on an outer circumference surface thereof that protrude to the outside, and the first groove may be received between the pair of first flanges.

The cabinet may have an insertion hole, the magnetization unit may be installed through the insertion hole, and the first groove and an inner surface of the insertion hole may be received between the first flanges.

The water supply valve assembly may include a pair of second flanges on an outer circumference thereof that protrude to the outside, and the second groove may be received between the pair of second flanges.

The magnetization unit and the water supply valve assembly may be detachably screwed to each other.

### [Advantageous Effects]

According to an embodiment of the invention, the wash water containing a lime material may have changed properties and pass through the magnetization unit, which makes it possible to prevent the lime material from adhering to a pipe.

Furthermore, since the washing power of the wash water may improve, the amount of detergent may be reduced, and the flexibility of laundry items may be improved to suppress the use of fabric conditioner.

Furthermore, the magnetization unit through which wash water containing a lime material passes may be easily detached from and coupled to the cabinet.

### [Description of Drawings]

The above and other aspects, features and advantages of the invention will become apparent from the following detailed description in conjunction with the accompanying drawings, in which:
FIG. 1 is an internal diagram illustrating main parts of a washer for supplying magnetized water in accordance with an embodiment of the present invention;
FIG. 2 is an exploded perspective view of the main parts of the washer for supplying magnetized water in accordance with an embodiment of the present invention;
FIG. 3 is a view of the assembled main parts of the washer for supplying magnetized water in accordance with an embodiment of the present invention; and
FIG. 4 is a schematic cross-sectional view of a magnetization unit in the washer for supplying magnetized water in accordance with an embodiment of the present invention.

### [Best Mode]

Embodiments of the invention will hereinafter be described in detail with reference to the accompanying drawings. It should be noted that the drawings are not to a precise scale and may be exaggerated in thickness of lines or sizes of components for descriptive convenience and clarity only. Furthermore, the terms as used herein are defined by taking functions of the invention into account and can be changed according to the custom or intention of users or operators. Therefore, definition of the terms should be made according to the overall disclosures set forth herein.

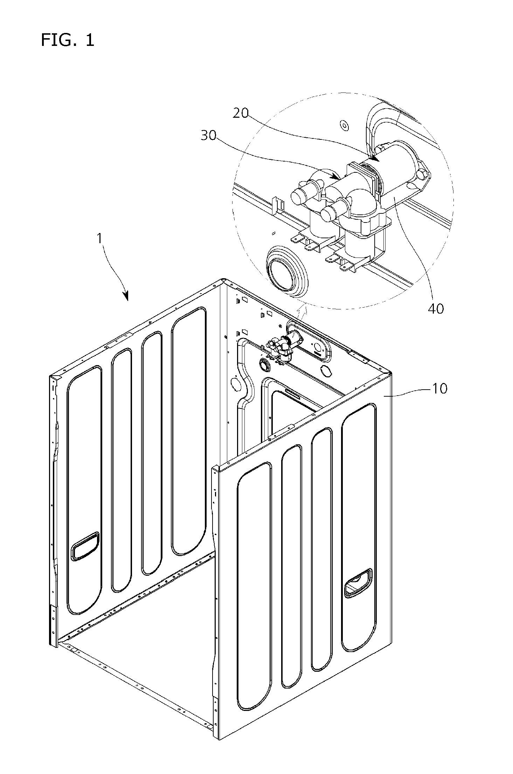

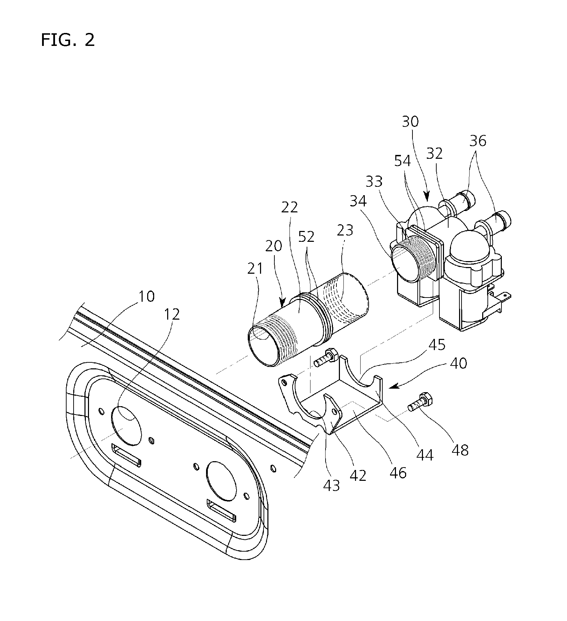

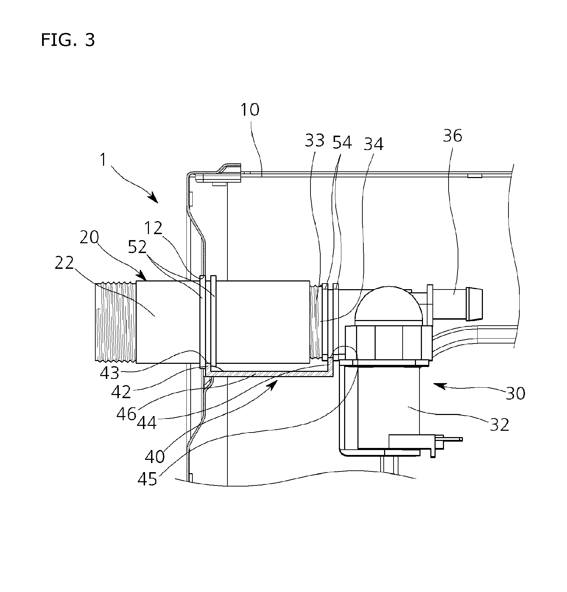

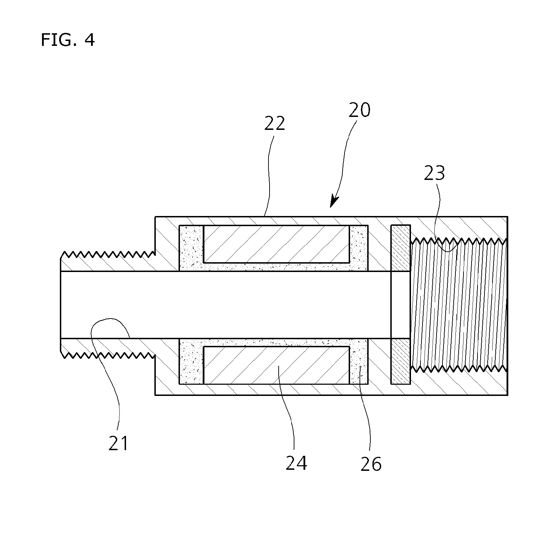

FIG. 1 is an internal diagram illustrating main parts of a washer for supplying magnetized water in accordance with an embodiment of the present invention. FIG. 2 is an exploded perspective view of the main parts of the washer for supplying magnetized water in accordance with an embodiment of the present invention. FIG. 3 is a view of the assembled main parts of the washer for supplying magnetized water in accordance with an embodiment of the present invention. FIG. 4 is a schematic cross-sectional view of a magnetization unit in the washer for supplying magnetized water in accordance with an embodiment of the present invention.

Referring to FIGS. 1 and 2, a washer 1 for supplying magnetized water in accordance with an embodiment of the present invention includes a cabinet 10, a magnetization unit 20, a water supply valve assembly 30, and a bracket 40.

The washer 1 for supplying magnetized water in accordance with an embodiment of the present invention may be applied to any one of an agitator-type washer, a pulsator-type washer, and a drum-type washer.

When the washer 1 for supplying magnetized water in accordance with an embodiment of the present invention is a drum-type washer, the washer 1 for supplying magnetized water may further include a tub (not illustrated) containing wash water and a rotatable drum (not illustrated) in the tub. In the present embodiment, the detailed structures of the tub and the drum which are installed in the cabinet 10 are not illustrated for convenience of description.

The cabinet 10 forms the exterior of the washer 1.

The magnetization unit 20 is installed to pass through the cabinet 10. The wash water passes through the magnetization unit 20 and is then transferred to a drum or an inlet box. The inlet box is generally a box containing detergent, a rinsing agent, fabric conditioner, or the like.

Since the magnetization unit 20 is installed through the cabinet 10, one end of the magnetization unit 20 is positioned inside the cabinet 10, and another end of the magnetization unit 20 is positioned outside the cabinet 10. Since the other end of the magnetization unit 20 is exposed to the outside of the cabinet 10, the wash water may be easily supplied from an outside source.

The cabinet 10 has an insertion hole 12 therein, through which the magnetization unit 20 passes. The insertion hole 12 has the same diameter as an outer diameter of the magnetization unit 20. Thus, it is possible to prevent unexpected vibrations after the magnetization unit 20 is installed through the insertion hole 12.

The washer 1 for supplying magnetized water may include one or more magnetization units 20. In the present invention, one magnetization unit 20 is installed.

The magnetization unit 20 generates a magnetic field that may change the properties of wash water containing a lime material. Thus, the effect of any lime material in the wash water supplied from the external water supply source on decreasing detergent solubility may be reduced. Furthermore, the lime material may be prevented from depositing onto the tub or the drum.

The water supply valve assembly 30 is connected to the magnetization unit 20. The water supply valve assembly 30 passes wash water from the magnetization unit 20 toward the inlet box or the like. Furthermore, the water supply valve assembly 30 serves to control the flow of wash water.

The water supply valve assembly 30 includes a body 32 to control the flow of wash water according to an electrical control signal, an inlet 34 at one side of the body 32 and connected to the magnetization unit 20 to receive wash water from the magnetization unit 20, and an outlet 36 at another side of the body 34 to discharge wash water. The wash water discharged from the outlet 36 flows toward the inlet box or the like.

The washer 1 for supplying magnetized water may include one or more water supply valve assemblies 30. In the present embodiment, one water supply valve assembly 30 is installed to correspond one-to-one to the magnetization unit 20.

The water supply valve assembly 30 may include one or more inlets 34. Furthermore, the water supply valve assembly 30 may include one or more outlets 36. The inlet 34 and the outlet(s) 36 may be integral with the body 32, or detachably coupled to the body 32.

The wash water supplied from the external water supply source sequentially flows through the magnetization unit 20, the water supply valve assembly 30, and then toward a target place such as the inlet box. Inside the water supply valve assembly 30, the wash water flows while sequentially passing through the inlet 34, the body 32, and one of the outlet(s) 36.

Referring to FIG. 4, the magnetization unit 20 may change the properties of the wash water containing a lime material, and apply a magnetic field.

The lime material contains calcium hydrogen carbonate (2CaHCO₃(aq)), and the calcium hydrogen carbonate is separated into limestone (2CaCO₃(s)) + water (H₂O(l)) + carbon dioxide (CO₂(g)) through a magnetic force, while passing through the magnetization unit 20.

The lime material may be changed to a "soft" state after passing through the magnetization unit 20, and may not adhere to the internal surface of a hose through which the wash water flows. That is, the calcium hydrogen carbonate in the lime material may disproportionate into water and carbon dioxide. A magnetic field is applied as water passes through the magnetization unit 20. As the cohesion between particles decreases, a volume for adhering detergent to the surface may decrease. Therefore, the solubility of the detergent in the wash water may be maximized, and the lime material may not adhere to the surface of the hose or the drum. The lime material may be discharged to the outside when the wash water in the tub is discharged.

Since the a molecular structure in the wash water that passes through the magnetization unit 20 may be modified, the wash water may have increased washing power and increased flexibility for laundry items.

The magnetization unit 20 includes a housing 22, a magnet 24, and a cover 26.

The housing 22 has a water flow channel 21 therein, through which wash water passes. One end of the water flow channel 21 connects to the external water supply source and receives the wash water from the external water supply source. Furthermore, another end of the water flow channel 21 connects to the inlet 34 of the water supply valve assembly 30 and supplies wash water to the inlet 34. In the present embodiment, the housing 22 has a cylindrical or tube shape, with a hollow portion therein forming the water flow channel 21.

The magnet 24 is inside the housing 22. More specifically, the magnet 24 is installed in a depressed portion on the inner surface of the housing 22. The cover 26 prevents contact between the magnet 24 and wash water.

The water flow channel 21 in the housing 22 has the same diameter at one end (the left end of FIG. 4) of the housing 22, the portion containing the magnet 24 and the cover 26, and the other end (the right end of FIG. 4) of the housing 22. Thus, wash water flowing through the water flow channel 21 can flow smoothly without any change in the flow rate.

The magnet 24 may include a permanent magnet such as a neodymium magnet with a strong magnetic field. Thus, the magnet 24 applies a magnetic field to wash water passing through the water flow channel 21 and may change the properties of the wash water. At this time, the number, shape, and magnetic force of the magnet 24 are not limited.

The cover 26 surrounds the magnet 24, thereby preventing contact between the magnet 24 and the wash water. Thus, it is possible to prevent oxidation of the magnet 24, which may occur when the magnet 24 comes in contact with the wash water.

The cover 26 is installed in a depressed portion of the inner surface of the housing 22, similar to the magnet 24. Thus, it is possible to provide the water flow channel 21 with a constant diameter inside the housing 22.

Since the cover 26 comprises a plastic material, the cover 26 does not corrode or oxidize even though the cover 26 comes into contact with the wash water.

The water supply valve assembly 30 and the magnetization unit 20 are connected and easily assembled and disassembled.

Referring to FIG. 2, the inlet 34 of the water supply valve assembly 30 has a first screw thread 33 on an outer circumference thereof. Furthermore, referring to FIGS. 2 and 4, the magnetization unit 20, or particularly, the other end of the housing 22, has a second screw thread 23 on the inner surface thereof.

When the first and second screw threads 33 and 23 are coupled to each other, the housing 22 of the magnetization unit 20 is coupled to the inlet 34 of the water supply valve assembly 30 (refer to FIGS. 1 and 3). On the other hand, when the housing 22 of the magnetization unit 20 is separated from the inlet 34 of the water supply valve assembly 30, the first and second screw threads 33 and 23 may be unscrewed or detached.

In the present embodiment, the magnetization unit 20 connects directly to the water supply valve assembly 30. The present invention is not limited thereto, but the magnetization unit 20 may be connected to the water supply valve assembly 30 through an intermediate medium.

As the magnetization unit 20 is installed through the insertion hole 12, the magnetization unit 20 and the water supply valve assembly 30 may be attached to the cabinet 10. Furthermore, the magnetization unit 20 and the water supply valve assembly 30 may be attached securely to the cabinet 10 when the magnetization unit 20 and the water supply valve 30 are supported by a bracket 40.

As illustrated in FIGS. 1 to 3, the bracket 40 may support only one or both of the magnetization unit 20 and the water supply valve assembly 30. In the present embodiment, one side of the bracket 40 supports the magnetization unit 20, and the other side of the bracket 40 supports the water supply valve assembly 30.

The bracket 40 includes a first installation member 42, a second installation member 44, and a connection member 46, and is detachably connected to the cabinet 10.

The first installation member 42 forms one end portion (a left end portion, as shown in FIG. 2) of the bracket 40. The first installation member 42 has a first groove 43 that supports the housing 22 and forms the exterior of the magnetization unit 20.

Specifically, the first groove 43 has a shape corresponding to an outer shape of the housing 22, and the housing 22 is forcibly inserted and coupled to the first groove 43. Thus, the housing 22 is securely mounted in or attached to the first groove 43 as long as an external force having a predetermined magnitude or greater is not applied. The first groove 43 surrounds an outside of the housing 22 such that the housing 22 is forcibly inserted and coupled to the groove 43. Thus, the bracket 40 and the magnetization unit 20 are securely coupled to each other.

Furthermore, since the shape of the first groove 43 corresponds to the outer shape of the housing 22, the size of the first installation member 42 may be reduced.

In the present embodiment, the first installation member 42 has a plate shape, and the first groove 43 has a semi-circular shape and is in the center of the first installation member 42.

The first installation member 42 may be detachably coupled to an inner surface of the cabinet 10. Referring to FIG. 2, the first installation member 42 may be securely coupled to the cabinet 10 with a fastening member 48. When the fastening member 48 is detached, the first installation member 42 may be removed from the cabinet 10. The fastening member 48 may include a mechanical fastening element, such as a bolt. Furthermore, the fastening member 48 may be applied in various manners.

The second installation member 44 forms the other end portion (a right end portion as shown in FIG. 2) of the bracket 40. The second installation member 44 has a second groove 45 to support the water supply valve assembly 30. Specifically, the second groove 45 has a shape corresponding to an outer shape of the inlet 34 of the water supply valve assembly 30, and the water supply valve assembly 30 is forcibly inserted and coupled to the second groove 45. Thus, the water supply valve assembly 30 is attached to the second groove45, and does not come off from the second groove 45 as long as an external force having a predetermined magnitude or greater is not applied. As the inlet 34 is forcibly inserted and coupled to the second groove 54, the bracket 40 and the water supply valve assembly 30 are securely coupled to each other.

Furthermore, since the second installation member 44 includes the second groove 45 formed to have a shape corresponding to the outer shape of the inlet 34, the size of the second installation member 44 may be reduced.

In the present embodiment, the second installation member 44 has a plate shape, and the second groove 45 has a semi-circular shape and is in the center of the second installation member 44.

The second installation member 44 may be forcibly inserted and coupled to the body 32 or the outlet 36 as well as the inlet 34 of the water supply valve assembly 30.

The connection member 46 comprises a central portion of the bracket 40, and connects the first and second installation members 42 and 44. That is, the first and second installation members 42 and 44 maintain a distance between them, and are connected to each other through the connection member 46.

The housing 22 which is forcibly inserted and coupled to the first installation member 42 and the inlet 34 which is forcibly inserted and coupled to the second installation member 44 are connected to each other through the connection member 46.

The first installation member 42 attaches to the cabinet 10 by a fastening member 48. The first installation member 42, the connection member 46, and the second installation member 44 may form an integral bracket 40. Thus, as the first installation member 42 attaches to the cabinet 10, the bracket 40 is securely attached to the cabinet 10.

When the magnetization unit 20 and the water supply valve assembly 30 are connected as one module, and are installed through the insertion hole 12, the magnetization unit 20 and the water supply valve assembly 30 are attached to the cabinet 10. Furthermore, the magnetization unit 20 and the water supply valve assembly 30 may be more securely attached to the cabinet 10 with additional support from the bracket 40.

The first installation member 42 may be pulled toward the second installation member 44 or be fixed by the connection member 46 when the housing 22 is forcibly inserted and coupled to the first installation member 42. Similarly, the second installation member 44 may be pulled toward the first installation member 42 or be fixed by the connection member 46 when the inlet 34 is forcibly inserted and coupled to the second installation member 44.

The magnetization unit 20, or particularly, the housing 22 has a pair of first flanges 52 on the outer circumference thereof, so as to face each other. The first installation member 42 is received between the pair of first flanges 52.

At this time, since the housing 22 is axially inserted into the insertion hole 12 of the cabinet 10, the first installation member 42 and the cabinet 10 are positioned between the pair of first flanges 52. The cabinet 10 received between the pair of first flanges 52 indicates the inner surface of the insertion hole 12.

When the first installation member 42 and the cabinet 10 are between the first flanges 52, the coupling strength between the first installation member 42 and the magnetization unit 20 improves.

The pair of first flanges 52 may be detachable from the outer circumference of the housing 22, or may be integral with the housing 22. The first flanges 52 may be modified into various shapes.

The water supply valve assembly 30 includes a pair of second flanges 54 thereon, configured to receive the second installation member 44. More specifically, the pair of second flanges 54 are on the outer circumference of the inlet 34 of the water supply valve assembly 30, and the second installation member 44 is inserted between the pair of second flanges 54.

When the second installation member 44 is between the second flanges 54, the coupling strength between the second installation member 44 and the water supply valve assembly 30 improves.

The second flanges 54 may be on the body 32 or the outlet 36. Furthermore, the second flanges 54 may be detachable from or integral with the water supply valve assembly 30.

The operation principle of the washer 1 for supplying magnetized water in accordance with an embodiment of the present invention will be described as follows.

Wash water supplied from an external water supply source passes through the magnetization unit 20 and then is transferred to a target place such as the inlet box through the water supply valve assembly 30. The water supply valve assembly 30 also serves to control a flow of the wash water.

The wash water discharged from the water supply valve assembly 30 passes through the inlet box and a detergent pipe, and is guided to the tub. When detergent, rinse, or fabric conditioner is in the inlet box, the wash water mixes with the detergent, rinse, or fabric conditioner and then is transferred to the tub.

When wash water containing a lime material passes through the magnetization unit 20, the properties of the wash water may change. Thus, wash water containing a lime material may be affected by the magnetic field of the magnetization unit 20, and the washing power and the flexibility for laundry items may improve. Therefore, when the washer 1 for supplying magnetized water is used, it may be possible to reduce the amount of fabric conditioner in comparison to the conventional washer.

Although some embodiments have been provided to illustrate the invention in conjunction with the drawings, it will be apparent to those skilled in the art that the embodiments are given by way of illustration only, and that various modifications and equivalent embodiments can be made without departing from the spirit and scope of the invention. The scope of the invention should be limited only by the accompanying claims.

## Claims

1. A washer for supplying magnetized water, comprising:
a cabinet;
a magnetization unit installed in the cabinet, generating a magnetic field; and
a water supply valve assembly connected to the magnetization unit and controlling a flow of wash water passing through the magnetization unit.

2. The washer of claim 1, further comprising a bracket coupled to the cabinet that supports the magnetization unit and the water supply valve assembly, and fixes the magnetization unit and the water supply valve assembly to the cabinet.

3. The washer of claim 2, wherein the bracket is detachably coupled to the cabinet.

4. The washer of claim 2 or 3, wherein the bracket comprises:
a first installation member having a first groove that surrounds an outside of the magnetization unit, where the magnetization unit is forcibly inserted and coupled to the first groove and coupled to the cabinet;
a second installation member having a second groove that surrounds an outside of the water supply valve assembly, where the water supply valve assembly is forcibly inserted and coupled to the second groove; and
a connection member connecting the first and second installation members.

5. The washer of claim 4, wherein the magnetization unit includes a pair of first flanges on an outer circumference thereof that protrude to an outside, and
the first groove is received between the pair of first flanges.

6. The washer of claim 5, wherein the cabinet has an insertion hole through which the magnetization unit is installed, and
the first groove and the inner surface of the insertion hole are received between the first flanges.

7. The washer of claim 4, wherein the water supply valve assembly includes a pair of second flanges on an outer circumference thereof, that protrude to an outside, and
the second groove is received between the pair of second flanges.

8. The washer of claim 1, wherein the magnetization unit and the water supply valve assembly are detachably coupled to each other.
